# EUROPÄISCHE PATENTSCHRIFT

(11) **EP 0 912 350 B1**
(45) Veröffentlichungstag und Bekanntmachung des Hinweises auf die Patenterteilung: **10.05.2000**
(21) Anmeldenummer: 97931676.7
(22) Anmeldetag: 25.06.1997
(51) Int. Cl.: B42D 15/10

(54) **VERFAHREN ZUM SICHERN VON ERZEUGNISSEN GEGEN FÄLSCHUNG MIT EINEM MASCHINELL LESBAREN SICHERHEITSMERKMAL**
PROCESS FOR PROTECTING PRODUCTS AGAINST FORGERY BY MEANS OF MACHINE-READABLE DISTINCTIVE SAFETY FEATURES
PROCEDE POUR PROTEGER DES PRODUITS CONTRE DES FALSIFICATIONS AU MOYEN DE SIGNES DISTINCTIFS DE SECURITE LISIBLES PAR MACHINE

(30) Priorität: 28.06.1996 DE 19627339
(43) Veröffentlichungstag der Anmeldung: 06.05.1999
(73) Patentinhaber: BUNDESDRUCKEREI GmbH, 10969 Berlin (DE)
(72) Erfinder: PAUGSTADT, Ralf, D-10829 Berlin (DE)
(74) Vertreter: Lüke, Dierck-Wilm, Dipl.-Ing.
(86) Internationale Anmeldenummer: DE9701353
(87) Internationale Veröffentlichungsnummer: WO9800298

(56) Entgegenhaltungen:
- US-A- 3 959 630
- US-A- 4 931 629

## Beschreibung

Die Erfindung bezieht sich auf ein Verfahren zum Sichern von Erzeugnissen gegen Fälschung mit einem maschinell lesbaren Sicherheitsmerkmal.

Insbesondere Personaldokumente, Banknoten, Wertpapiere, Urkunden, Servicekarten, wie Kreditkarten oder dgl., Postwertzeichen, aber auch andere Erzeugnisse, wie Medikamente, Ersatzteile, Juwelen, allgemein Erzeugnisse, die wirtschaftliche Bedeutung haben oder die authorisiert sein müssen, sind oft in einem leicht nachzustellenden Verfahren herstellbar.

Es ist bei diesen Erzeugnissen wünschenswert, Merkmale einzubringen, die den Nachweis ihrer Echtheit, d.h. ihrer Originalität ermöglichen.

Die Sicherheitsmerkmale sollten möglichst untrennbar mit dem zu authorisierenden Erzeugnis verbunden sein und/oder Eigenschaften aufweisen, die schwer zu reproduzieren sind.

Die Herstellung und die Anwendung von Sicherheitsmerkmalen bei Erzeugnissen sind allgemeiner Stand der Technik.

Besondere Bedeutung haben die maschinell lesbaren Sicherheitsmerkmale.

Als Sicherheitsmerkmal werden in das zu schützende Erzeugnis häufig Spezialfarben mit spektralen Besonderheiten oder mit magnetischen Eigenschaften oder mit Temperaturabhängigkeiten (thermochrome Farben) eingebracht. Es werden Barcode eingesetzt, bei denen die Reflektivitätsunterschiede der Oberfläche ausgenutzt wird, oder es werden Gitterstrukturen oder auch Folienantennen zur Ausnutzung der Resonanzfrequenz in einem Schwingkreis angewendet.

Den bekannten maschinell lesbaren Sicherheitsmerkmalen ist gemeinsam, daß sie sich im Grad der Fälschungssicherheit zwar unterscheiden, aber generell mit unterschiedlichem Aufwand reproduziert und sehr häufig optisch sichtbar gemacht werden können und somit keine ausreichende Sicherheit gegen Fälschungen gewährleisten.

Der Erfindung liegt die Aufgabe zugrunde, ein Verfahren zum Sichern von Erzeugnissen gegen Fälschungen mit maschinell lesbaren Sicherheitsmerkmalen zu entwickeln, welches preiswerte Sicherheitsmerkmale mit einer hohen Fälschungssicherheit gewährleistet.

Die Lösung dieser Aufgabe ergibt sich aus den Merkmalen des Patentanspruchs 1.

Durch das durch seine spezifischen physikalischen Eigenschaften und Parameter definierte supraleitende Material wird jedem zu schützende Erzeugnis ein Sicherheitsmerkmal gegeben, welches preiswert herstellbar, robust und unsichtbar ist und eine größtmögliche Fälschungssicherheit gewährleistet.

Das Sicherheitsmerkmal kann im Erzeugnis, auf dem Erzeugnis, als Schicht, als Partikelanhäufung, als Druckmuster oder dgl., im Erzeugnis als Beschichtung oder als Schicht in einem laminaren Aufbau, in jeder denkbaren Version beigebracht werden.

Das Sicherheitsmerkmal ist passiv, es emittiert keine Strahlung, es ist mit optischen Verfahren oder Mitteln nicht nachweisbar.

Das Sicherheitsmerkmal gibt keine Hinweise auf die zugrundeliegende Sicherheitseigenschaft, wie sie z.B. bei Anwendung von Barcodes oder Folienantennen offenbart werden.

Es gibt ohne Kenntnis der Verifikationstechnologie keinen Hinweis auf das eingebrachte Sicherheitsmerkmal und damit keinen Ansatz für die vollständige Nachahmung des Erzeugnisses einschließlich dessen Sicherheitsmerkmal.

Das Sicherheitsmerkmal ist durch die verschiedensten Technologien realisierbar, z.B. mittels der Drucktechnik. Es kann auch vorgefertigt werden und nachträglich mit dem zu schützenden Erzeugnis in Form eines Chips oder eines Etiketts oder dgl.verbunden werden.

Sicherheitsmerkmale zeichnen sich dadurch aus, daß sie Eigenschaften (Sicherheitseigenschaften) haben, die schwer zu reproduzieren sind.

Die Sicherheitseigenschaften sind durch die Variation des Schichtmaterials und dessen Parameter einstellbar. Fälschungen würden selbst bei Kenntnis der Sicherungseigenschaften die Reproduktion dieser Eigenschaften erfordern.

Die erfindungsgemäßen Sicherheitsmerkmale sind für alle Arten von Erzeugnissen mit höchster Effektivität und Zuverlässigkeit verwendbar.

Hochtemperatur-Supraleiter, d.h. Supraleiter, die bei vergleichsweise hohen Temperaturen (um 100° Kelvin) in den Zustand der Supraleitung übergehen und die mit einfachen und preiswerten Mitteln, mit flüssigem Stickstoff oder mit Kältemaschinen, auf ihre Supraleitungstemperatur heruntergekühlt werden können, sind seit dem Jahre 1986/1987 bekannt.

Es handelt sich bei diesen Supraleitern um keramische oder keramikähnliche Substanzen, die mit verschiedenen Verfahren z.B. in dünnen Schichten auf Substraten abgeschieden oder auch gedruckt werden können. Geeignete Supraleiter sind insbesondere
- YBa₂Cu₃O_{7-delta} (YBCO), wobei das Element Yttrium durch alle seltenen Erden außer Ce, Pr, Tb ersetzt werden kann, und wobei die Sprungtemperatur des Materials über den Sauerstoffgehalt (delta) variiert werden kann,
- Bi₂Sr₂Ca₁Cu₂O₈,
- Bi₂Si₂Ca₁Cu₂O₈,
- Bi_{1,4}Pb_{0,6}Sr₂Ca₂Cu₃O₁₀,
- PrBa₂Cu₃O₇/YBa₂Cu₃O₇,
- Tl₂Ca₂Ba₂Cu₃Oₓ.

Besonders billige und einfache Herstellungsverfahren erfordern die Bismut-Verbindungen, die außerdem eine hohe Beständigkeit aufweisen und unempfindlich gegen Feuchtigkeit sind und für die Anwendung als Sicherheitsmerkmal geeignet sind.

Hochtemperatur-Süpraleiter lassen sich mit verschiedenen Technologien herstellen. Je nach Art der Verarbeitung weisen sie unterschiedliche elektrische Eigenschaften auf, die ihr Einsatzgebiet festlegen.

Es ist z.B. mit einem speziellen CVD-Verfahren preisgünstig die gleichmäßige Beschichtung von Flächen und auch kompliziert geformter Substrate möglich.

Die für die Elektronik verwendbaren Supraleiter sind vorteilhaft bei Erzeugnissen zur Sicherung ihrer Originalität anwendbar, bei denen zweckmäßigerweise vorgefertigte Sicherheitsmerkmale nachträglich beigebracht werden, z.B. als Chip oder Etikett bei Bekleidung oder bei Servicekarten, z.B. durch Aufkleben, Aufnähen oder durch Einlaminieren.

Es werden hierbei einkristalline Schichten eines Supraleiters auf ein Substrat, z.B. ein Chip, aufgebracht.

Es reichen aber auch supraleitende Schichten aus, die aufgedruckt oder durch Tauchen erzeugt werden. Dabei kann supraleitendes Materialpulver verwendet werden, das z.B. in einem geeigneten Medium dispergiert wird. Es eignen sich auch die Tauchbeschichtung und thermische Zersetzung, der Siebdruck oder das "Gravur Offset Printing".

Die Eigenschaften der verschiedenen Supraleiter wurden bisher u.a. in der Elektronik, in der Medizintechnik, in der Energietechnik mit positiven Effekten zur Anwendung gebracht.

Nach der vorliegenden Erfindung werden insbesondere die folgenden Eigenschaften von supraleitenden Materialien in ihrem supraleitenden Zustand zur Sicherung von Erzeugnissen herangezogen
- Absenkung des elektrischen Widerstandes auf Null nach Absenkung auf die Sprungtemperatur,
- Abschirmung von Magnetfeldern,
- Resonanzen im Mikrowellenbereich,
- Reflektivität und Absorption elektromagnetischer Wellen.

Eine große Sicherheit gegen Produktfälschungen wird insbesondere dann erreicht, wenn die individuellen Eigenschaften eines speziellen Supraleiters, wie z.B.
- seine individuelle Sprungtemperatur,
- seine individuelle kritische Stromstärke,
- seine individuelle Geometrie/Resonanz,
oder andere individuelle Parameter zum Nachweis der Echtheit herangezogen werden.

## Patentansprüche

1. Verfahren zum Sichern von Erzeugnissen gegen Fälschungen mit maschinell lesbaren Sicherheitsmerkmalen,
**dadurch gekennzeichnet, daß**
das zu sichernde Erzeugnis in mindestens einem Bereich mit mindestens einem supraleitenden Material mit definierten und reproduzierbaren, spezifischen Parametern versehen wird.

2. Verfahren nach Anspruch 1, dadurch gekennzeichnet, daß drucktechnische Erzeugnisse, wie Dokumente, Ausweise, Wertpapiere, Kreditkarten, Urkunden, Postwertzeichen und dgl., mit einem in seinen Parametern definierten supraleitenden Material versehen werden.

3. Verfahren nach Anspruch 2, dadurch gekennzeichnet, daß die drucktechnischen Erzeugnisse mit dem supraleitenden Material mindestens partiell beschichtet werden.

4. Verfahren nach Anspruch 2, dadurch gekennzeichnet, daß die drucktechnischen Erzeugnisse mit dem supraleitenden Material mindestens partiell bedruckt werden.

5. Verfahren nach Anspruch 1, dadurch gekennzeichnet, daß das zu sichernde Erzeugniss mit einem Zusatzteil, welches mit einem supraleitenden Material versehen wurde, verbunden wird.

6. Verfahren nach Anspruch 1, dadurch gekennzeichnet, daß supraleitendes Material als Einkristall auf ein Substrat gebracht wird, welches als Sicherheitsmerkmal mit dem zu sichernden Erzeugnis durch Ein-/Aufkleben, Einlaminieren oder dgl. in Verbindung gebracht wird.

7. Verfahren nach den Ansprüchen 1 bis 5, dadurch gekennzeichnet, daß das supraleitende Material als geometrisches Muster aufgebracht wird.

8. Verfahren nach Anspruch 1, dadurch gekennzeichnet, daß als supraleitendes Material ein Material verwendet wird, dessen für die Supraleitung charakteristische Parameter durch geeignete Wahl der Materialzusammensetzung und der Herstellungstechnologie variiert werden können.

9. Verfahren nach Anspruch 8, dadurch gekennzeichnet, daß als supraleitendes Material YBa₂CU₃O_{7-delta} oder ein gleichwertiges Material eingesetzt wird, dessen Sprungtemperatur durch die Veränderung des Sauerstoffanteils variiert wird.

10. Verfahren nach den Ansprüchen 1 bis 9, dadurch gekennzeichnet, daß die speziellen physikalischen Eigenschaften und Parameter der verwendeten supraleitenden Materialien zum Nachweis der Echtheit des Erzeugnisses verwendet werden.

11. Verfahren nach Anspruch 10, dadurch gekennzeichnet, daß zum Nachweis des Sicherheitsmerkmales das eingebrachte supraleitende Material durch Abkühlung bis auf die Sprungtemperatur supraleitfähig gemacht wird und und die Blockierung eines Magnetfeldes durch das supraleitende Material beim Unterschreiten der Sprungtemperatur kontrolliert wird.

12. Verfahren nach den Ansprüchen 7 und 10, dadurch gekennzeichnet, daß die Resonanzeigenschaften der als geometrisches Muster aufgebrachten supraleitenden Schicht nachgewiesen werden.

13. Verfahren nach Anspruch 10, dadurch gekennzeichnet, daß der Abfall des elektrischen Widerstandes auf Null, die Verdrängung bzw. Blockierung magnetischer Flußlinien, die Änderung der Absorption von Ultraschall und elektromagnetischer Strahlung, insbesondere von Infrarot-Strahlung, die Änderung der Wärmekapazität und der Wärmeleitfähigkeit im supraleitenden Zustand des Materials bei seinen spezifischen Parametern wahlweise oder in der Gesamtheit zum Nachweis verwendet werden.

## Claims

1. A process for protecting products against forgery by means of machine-readable distinctive safety features,
characterised in that the product to be protected is provided at least in one section with at least one superconductive material having defined and reproducible, specific parameters.

2. A process according to claim 1,
characterised in that printed products, such as documents, identity cards, stocks and shares, credit cards, certificates, postage stamps etc., are provided with a superconductive material defined in its parameters.

3. A process according to claim 2,
characterised in that the printed products are coated at least partially with the superconductive material.

4. A process according to claim 2,
characterised in that the printed products are imprinted at least partially with the superconductive material.

5. A process according to claim 1,
characterised in that the product to be protected is connected to an additional part having been provided with the superconductive material.

6. A process according to claim 1,
characterised in that superconductive material is applied as a single crystal on a substrate being connected as a distinctive safety feature to the product to be protected by gluing in or on, laminating in or the like.

7. A process according to claims 1 to 5,
characterised in that the superconductive material is applied as a geometrical pattern.

8. A process according to claim 1,
characterised in that as superconductive material a material is used, the parameters thereof being characteristic for the superconductivity being variable by suitable choice of the material composition and of the manufacturing technology.

9. A process according to claim 8,
characterised in that as superconductive material YBa₂Cu₃O_{7-delta} or an equivalent material is employed, the superconductivity step temperature thereof being varied by changing the oxygen content.

10. A process according to claims 1 to 9,
characterised in that the special physical properties and parameters of the employed superconductive materials are used for proving the authenticity of the product.

11. A process according to claim 10,
characterised in that for proving the distinctive safety feature, the applied superconductive material is made superconductive by cooling down to the superconductivity step temperature, and that the blocking of a magnetic field by the superconductive material is checked when falling below the superconductivity step temperature.

12. A process according to claims 7 and 10,
characterised in that the resonance properties of the superconductive layer applied as a geometrical pattern are detected.

13. A process according to claim 10,
characterised in that the reduction of the electrical resistance to zero, the displacement or blocking of magnetic flux lines, the variation of absorption of ultrasonics and of electromagnetic radiation, in particular of infrared radiation, the variation of the heat capacity and heat conductivity in the superconductive condition of the material at its specific parameters are individually or totally used for detection.

## Revendications

1. Procédé pour protéger des produits contre des falsifications au moyen de signes distinctifs de sécurité lisibles par machine,
caractérisé en ce que le produit à protéger est pourvu en au moins une zone d'au moins une matière supraconductible ayant des paramètres définis et reproductibles, spécifiques.

2. Procédé selon la revendication 1,
caractérisé en ce que des produits d'impression, comme p.ex. documents, cartes d'identité, cartes de crédit, certificats, timbres-poste et semblables, sont pourvus d'une matière supraconductible définie en ce qui concerne ses paramètres.

3. Procédé selon la revendication 2,
caractérisé en ce que les produits d'impression sont recouverts au moins partiellement de la matière supraconductible.

4. Procédé selon la revendication 2,
caractérisé en ce que les produits d'impression sont imprimés au moins partiellement de la matière supraconductible.

5. Procédé selon la revendication 1,
caractérisé en ce que le produit à protéger est lié à une partie additionnelle, qui a été pourvue de la matière supraconductible.

6. Procédé selon la revendication 1,
caractérisé en ce que la matière supraconductible est mise en place comme monocristal sur un substrat, qui est lié comme signe distinctif au produit à protéger par collage, laminage ou semblables.

7. Procédé selon les revendications 1 à 5,
caractérisé en ce que la matière supraconductible est mise en place comme patron géométrique.

8. Procédé selon la revendication 1,
caractérisé en ce que comme matière supraconductible une matière est utilisée, dont les paramètres caractéristiques pour la supraconductibilité peuvent être variés par sélection adéquate de la composition de la matière et de la technologie de production.

9. Procédé selon la revendication 8,
caractérisé en ce que comme matière supraconductible YBa₂Cu₃O_{7-delta} ou une matière équivalente est utilisé, dont la température de changement brusque de la conductivité est variée par modification de la fraction de l'oxygène.

10. Procédé selon les revendications 1 à 9,
caractérisé en ce que les propriétés et paramètres spéciaux physiques des matières supraconductibles utilisées sont employés pour la preuve de l'authenticité du produit.

11. Procédé selon la revendication 10,
caractérisé en ce que pour la preuve du signe distinctif de sécurité la matière supraconductible mise en place est rendue supraconductible par refroidissement jusqu'à la température de changement brusque de la conductivité, et le blocage d'un champ magnétique par la matière supraconductible en arrivant au-dessous de la température de changement brusque de la conductivité est contrôlé.

12. Procédé selon les revendication 7 et 10,
caractérisé en ce que les propriétés de résonance de la couche supraconductible mise en place comme patron géométrique sont prouvées.

13. Procédé selon la revendication 10,
caractérisé en ce que la chute de la résistance électrique à zéro, le déplacement ou blocage des lignes de champ magnétiques, la modification de l'absorption d'ultrason et de rayonnement électromagnétique, en particulier de rayonnement infrarouge, la modification de la capacité calorifique et de la conductivité thermique en état supraconductible de la matière à ses paramètres spécifiques sont utilisés individuellement ou totalement comme preuve.
